# EUROPEAN PATENT APPLICATION

(11) **EP 3 435 025 A1**
(43) Date of publication of application: **30.01.2019**
(21) Application number: 17769823.0
(22) Date of filing: 28.02.2017
(51) Int. Cl.: G01B 11/00, G01B 11/26, G02B 3/00, G03B 35/00

(54) **MARKER**

(30) Priority: 23.03.2016 JP 2016058546
(71) Applicant: Enplas Corporation, Kawaguchi-shi, Saitama 332-0034 (JP)
(72) Inventor: SAITO, Tomohiro, Saitama 332-0034 (JP)
(74) Representative: Epping - Hermann - Fischer
(86) International application number: PCT/JP2017/007601
(87) International publication number: WO 2017/163778

(57) **Abstract**

A marker according to the present invention is formed of a translucent material, and comprises at least: a plurality of protruding surfaces arranged in a first direction; and a plurality of portions to be detected which are arranged at positions on the reverse side to the plurality of protruding surfaces and which are projected, as optically detectable images, onto the plurality of protruding surfaces. Each of the cross-sectional shapes of the plurality of protruding surfaces in a cross section in the height direction of the marker along the first direction is a curved line having a curvature radius which increases with increase in a distance from the vertex of the curved line.

## Description

### Technical Field

The present invention relates to a marker.

### Background Art

Recently, an indicator employing a combination of a lens and a mark, has been used as a marker for recognizing the position, attitude, and/or the like of an object in the fields of Augmented Reality (AR), robotics, and/or the like (see, e.g., Patent Literature (hereinafter referred to as "PTL") 1).

PTL 1 discloses a marker including a lenticular sheet and an image forming layer, in which the lenticular sheet includes a plurality of cylindrical lenses arranged side by side, and the image forming layer contains images respectively corresponding to the cylindrical lenses. The cylindrical lenses are formed such that their focal points are situated on the images. When the marker is viewed from the side of the cylindrical lenses, the moved or deformed image of the mark is observed depending on viewpoints.

### Citation List

### Patent Literature

PTL 1
Japanese Patent Application Laid-Open No. 2013-025043

### Summary of Invention

### Technical Problem

As for cylindrical lenses, those cylindrical lenses which have a curved surface whose section along the minor-axis direction is arc-shaped and whose section along the major-axis direction is linear are common. When such a commonly-shaped cylindrical lens is used in the marker disclosed in PTL 1, light incident on the curved surface at a position distant from the central axis of the cylindrical lens is focused at a point distant from the focal point of the cylindrical lens on the incidence-plane side (curved-surface side) (spherical aberration). For this reason, the marker disclosed in PTL 1 is supposed to have a problem in that the image of the mark cannot be observed appropriately depending on the observation position.

Therefore, an object of the present invention is to provide a marker which enables appropriate observation of a mark irrespective of the observation position.

### Solution to Problem

A marker of the present invention is a marker formed of an optically transparent material, and includes: a plurality of convex surfaces disposed at least along a first direction; and a plurality of detection object parts respectively disposed opposite to the plurality of convex surfaces, and configured to be respectively projected onto the plurality of convex surfaces in a form of optically detectable images. A sectional shape of each of the plurality of convex surfaces in a section of the marker taken along the first direction and along a height direction of the marker is a curve whose radius of curvature increases with increasing distance from a vertex of the curve.

### Advantageous Effects of Invention

The present invention can provide a marker in which spherical aberration is less likely to be caused than in the traditional marker and which enables appropriate observation of a mark irrespective of the observation position.

### Brief Description of Drawings

FIGS. 1A and 1B illustrate a configuration of a marker according to Embodiment 1 of the present invention;
FIGS. 2A and 2B illustrate some optical paths in the marker;
FIGS. 3A to 3F illustrate simulation results;
FIGS. 4A and 4B illustrate a configuration of a marker according to Embodiment 2 of the present invention;
FIGS. 5A to 5C illustrate a configuration of a marker according to Embodiment 3 of the present invention;
FIGS. 6A to 6C illustrate a configuration of a marker according to Embodiment 4 of the present invention;
FIGS. 7A to 7D illustrate a configuration of a marker according to Embodiment 5 of the present invention;
FIGS. 8A to 8D illustrate a configuration of a marker according to Embodiment 6 of the present invention; and
FIGS. 9A to 9D illustrate a configuration of a marker according to Embodiment 7 of the present invention.

### Description of Embodiments

Hereinafter, descriptions will be given of a marker according to an embodiment of the present invention with reference to the attached drawings.

### [Embodiment 1]

### (Configuration of Marker)

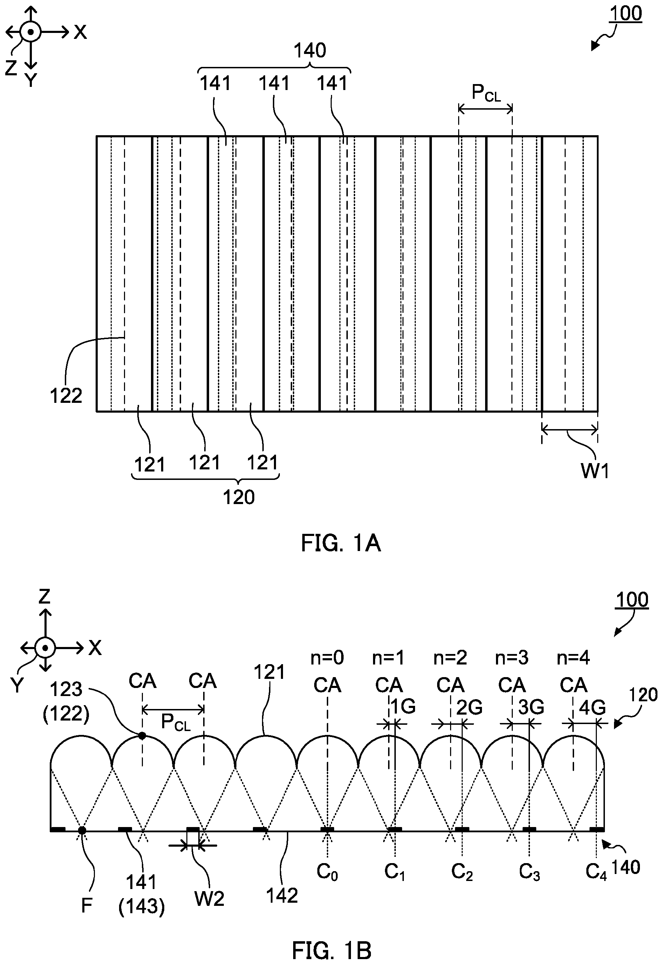

FIGS. 1A and 1B illustrate a configuration of marker 100 according to Embodiment 1 of the present invention. FIG. 1A is a plan view of marker 100 according to Embodiment 1 of the present invention, and FIG. 1B is a front view of marker 100.

As illustrated in FIGS. 1A and 1B, marker 100 includes front surface (first surface) 120 and rear surface (second surface) 140. The material of marker 100 is not particularly limited as long as the material is optically transparent. Examples of the material of marker 100 include transparent resins such as polycarbonate, acrylic resin, cycloolefin polymer (COP), and cycloolefin copolymer (COC); glass; and the like. In this embodiment, the material of marker 100 is cycloolefin copolymer (COC) having refractive index nd of 1.54. Front surface 120 includes a plurality of cylindrical convex surfaces 121. In addition, rear surface 140 includes a plurality of detection object parts 141 and a plurality of reflecting parts 142.

The plurality of convex surfaces 121 are arranged along a first direction (the X-direction in FIG. 1). Each of the plurality of convex surfaces 121 extends in a third direction (the Y-direction in FIG. 1) perpendicular to the first direction and the height direction of marker 100 (a second direction, or the Z-direction in FIG. 1). Convex surface 121 is a curved surface which includes ridgeline 122 linearly extending in the third direction and has a curvature only in the first direction. That is, marker 100 according to the present embodiment has a lenticular structure. In addition, ridgeline 122 coincides with vertex 123 in a section of marker 100 taken along the first direction (the X-direction) and along the height direction (the Z-direction) of marker 100. In addition, each two of the plurality of convex surfaces 121 adjacent to each other are disposed without any gap therebetween.

All of convex surfaces 121 have the same size. For example, width W1 (length in the first direction) of one convex surface 121 is 440 µm, and pitch P_{CL} of the plurality of convex surfaces 121 is 440 µm. The term "pitch" as used in this context means the distance between ridgelines 122 (vertices 123 or central axes CA) of convex surfaces 121 adjacent to each other in the first direction, and is also the length (width) of convex surface 121 in the first direction. The term "central axis CA of convex surface 121" as used in this context means a straight line passing through the center of convex surface 121 in plan view of convex surface 121 and extending along the second direction (the Z-direction) perpendicular to the first direction (the X-direction) and to the third direction (the Y-direction). In addition, "vertex 123 of convex surface 121" means the position of ridgeline 122 in the section of marker 100 taken along the first direction (the X-direction) and along the height direction (the Z-direction) of marker 100. That is, vertex 123 of convex surface 121 is an intersection of convex surface 121 and central axis CA in the present embodiment.

The sectional shape of each of the plurality of convex surfaces 121 in the section of marker 100 taken along the first direction (the X-direction) and along the height direction (the Z-direction) of marker 100 is a curve whose radius of curvature increases with increasing distance from vertex 123 of the curve. Such a radius of curvature may increase with increasing distance from vertex 123 of the curve, continuously or intermittently. The radius of curvature at central axis CA (vertex 123) is 0.25 mm in the present embodiment. In addition, convex surface 121 (lens surface) is formed such that the height of convex surface 121 in the Z-direction at a point 0.22 mm away from central axis CA in the X-direction is 25 µm higher than in the case of a spherical surface. That is, convex surface 121 is an aspherical surface. In addition, focal point F of convex surface 121 is situated on detection object part 141.

Detection object parts 141 are disposed opposite to respective convex surfaces 121, and are projected onto respective convex surfaces 121 in the form of optically detectable images. Detection object parts 141 extend along the third direction (the Y-direction) in plan view of marker 100. The configuration of detection object parts 141 is not limited as long as detection object parts 141 are projected, as described above, onto respective convex surfaces 121 in the form of optically detectable images. Each of detection object parts 141 may be a recess or a protrusion. Detection object part 141 is a recess in the present embodiment. The shape of the recess is not limited as long as the recess has a predetermined width in plan view of marker 100. In addition, coating film 143 formed by applying a coating material may be disposed in the recess. In the present embodiment, detection object part 141 in plan view has a rectangular shape elongated in the third direction. The term "center of detection object part 141" means the middle point of detection object part 141 in the first direction (the X-direction) and in the third direction (the Y-direction).

In addition, the depth of the recess for forming detection object part 141 is not particularly limited as long as a desired function (image indication) can be ensured. The depth of the recess for forming detection object part 141 can be set appropriately, for example, within the range of from 10 to 100 µm. In the present embodiment, the depth of the recess for forming detection object part 141 is 10 µm, for example. Length (width) W2 in the first direction (the X-direction) of the recess for forming detection object part 141 is 45 µm, for example. The contrast of the image observed on the side of convex surface 121 tends to be greater as width W2 of detection object part 141 is made smaller relative to P_{CL}. In addition, the ease of production of detection object part 141 tends to be greater as width W2 of the detection object part 141 is made greater relative to P_{CL}. Preferably, the ratio of width W2 of detection object part 141 to pitch P_{CL} (W2/P_{CL}) is from 1/200 to 1/5 in view of obtaining a sufficiently clear image.

Detection object part 141 is disposed such that the image of detection object part 141 appears at a center portion of convex surface 121 when marker 100 is observed from the side of front surface 120 at the center of convex surface 121 in the first direction (the X-direction) and the third direction (the Y-direction).

For example, in the first direction (the X-direction), detection object part 141 corresponding to convex surface 121 situated at the center of front surface 120 (convex surface 121 of n=0 in FIG. 1B) is disposed such that center Co thereof coincides with central axis CA of convex surface 121 of n=0.

The center-to-center distance (|Cₙ-Cₙ₋₁|) of detection object parts 141 corresponding to convex surfaces 121 adjacent to each other in the first direction (the X-direction) is represented by P_{CL} + nG (µm). As described above, P_{CL} is the distance between vertices 123 of two adjacent convex surfaces 121. In addition, "G" denotes a predetermined distance (e.g., 8 µm) from P_{CL} in the first direction (the X-direction) required for an optical effect of images to be expressed. Further, "n" represents an order of a certain convex surface 121 with respect to 0th convex surface 121 located at the center in the first direction (the X-direction).

As understood from the above descriptions, detection object parts 141 corresponding to convex surfaces 121 located at respective distances from central convex surface 121 (n=0) are disposed to be offset outward in the first direction (the X-direction) from central axes CA of corresponding convex surfaces 121, respectively. That is, in the present embodiment, the distance between vertices 123 of adjacent convex surfaces 121 is smaller than the center-to-center distance of adjacent detection object parts 141.

Coating film 143 is formed in detection object part 141. Coating film 143 is a solidified black liquid coating material, for example.

Coating film 143 is produced through application and solidification of a coating material. The black liquid coating material is fluid and, for example, is a liquid composition or powder. The method of applying or solidifying the coating material may be appropriately selected from publicly known methods in accordance with the coating material. Examples of the application method of the black liquid coating material include spray coating and screen printing. In addition, examples of the solidification method of the black liquid coating material include drying of a black liquid coating material, curing of a curable composition (such as radical polymerizable compound) contained in a black liquid coating material, and baking of powder.

Coating film 143 forms an optically discriminable portion. The term "optically discriminable" means that there is an evident difference between coating film 143 and other portions in their optical characteristics. The term "optical characteristics" as used herein means, for example, the color attributes such as brightness, saturation, and hue, or the optical intensity such as luminance. The aforementioned difference may be appropriately set in accordance with the use of marker 100, and may be a difference which can be visually checked, or a difference which can be checked with an optical detection apparatus, for example. In addition, the aforementioned difference may be a difference which can be detected directly from coating film 143, or a difference which can be detected through an additional treatment such as UV lamp irradiation. The UV lamp irradiation may be employed, for example, in the case where coating film 143 is a transparent film that emits fluorescence.

When marker 100 is placed on a white object, light which is incident on convex surfaces 121 and reaches detection object parts 141 is absorbed by coating films 143. In contrast, light which is incident on convex surfaces 121 and reaches reflecting parts 142 is reflected by the surface of reflecting parts 142 and returns to convex surfaces 121. As a result, an image of lines having a color (black) of coating films 143 is projected onto convex surface 121 and in front of a white background.

Since detection object parts 141 are appropriately disposed in accordance with their distances from the center of marker 100 in the first direction (the X-direction), a black collective image of black line images is observed when marker 100 is observed from the side of front surface 120.

When marker 100 is viewed, for example, from the center in the first direction (the X-direction), the black collective image is observed at a center portion in the first direction. When marker 100 is observed at a different angle in the first direction (the X-direction), the collective image is observed at a different position in the first direction according to the observation angle. That is, the angle of the observation position of marker 100 is determined based on the position of the collective image in the first direction (the X-direction).

### (Simulation)

Next, a relationship between the sectional shape of each of the convex surfaces in the section of the marker taken along the first direction (the X-direction) and along the height direction (the Z-direction) of the marker, on the one hand, and a spot diagram for the position of the detection object part, on the other hand was examined. In this simulation, marker 300 according to Embodiment 3 and marker 300' according to a comparative example were used. Convex surfaces 321 of marker 300 according to Embodiment 3 are each an aspherical surface whose curvature increases with increasing distance from central axis CA in the first and the third directions. In contrast, convex surfaces 321' of marker 300' according to the comparative example are each a spherical surface. In this simulation, light beam L1 that is parallel to optical axis OA in the section of marker 300 (300') taken along the first direction (the X-direction) and along the height direction (the Z-direction) of marker 300 (300'); light beam L2 whose inclination angle to optical axis OA is 13 degrees in said section; and light beam L3 whose inclination angle to optical axis OA is 26 degrees in said section were used as light beams incident on convex surface 321 (321').

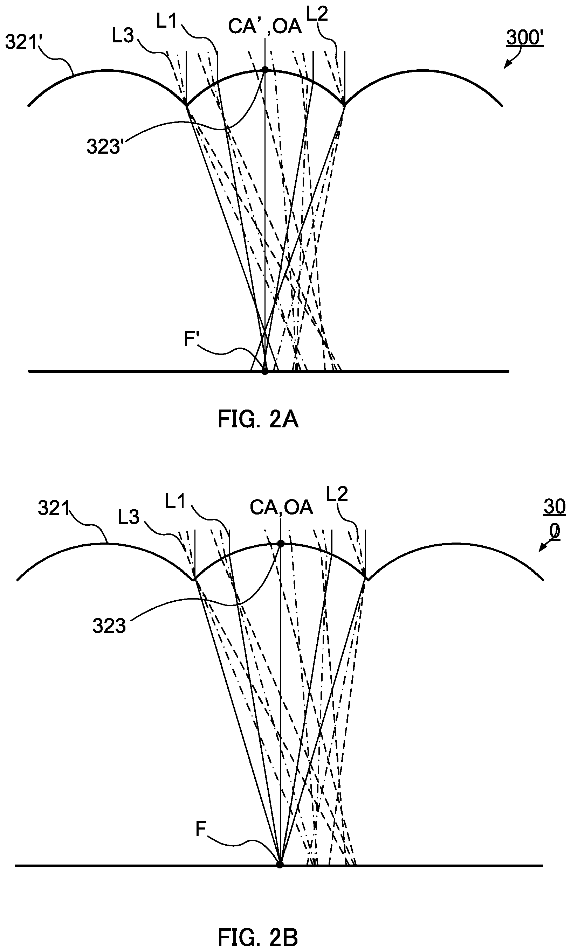

FIGS. 2A and 2B illustrate some light beams in the markers. FIG. 2A illustrates some light beams in marker 300' according to the comparative example, and FIG. 2B illustrates some light beams in marker 300 according to Embodiment 3.

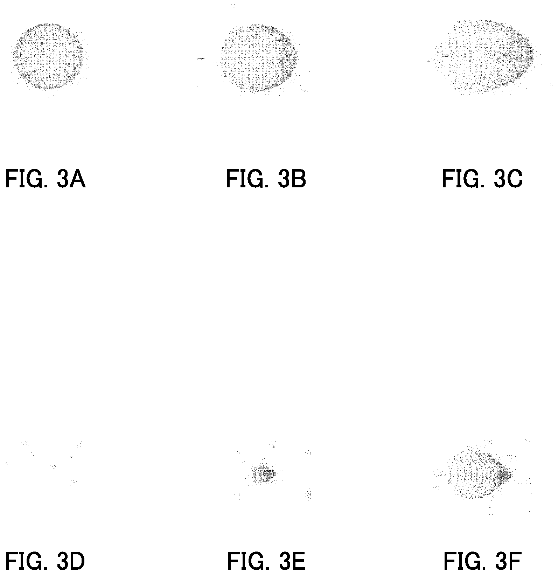

FIGS. 3A to 3F illustrate simulation results. FIG. 3A is a spot diagram of light beams L1 in marker 300', FIG. 3B is a spot diagram of light beams L2 in marker 300', FIG. 3C is a spot diagram of light beams L3 in marker 300', FIG. 3D is a spot diagram of light beams L1 in marker 300, FIG. 3E is a spot diagram of light beams L2 in marker 300, and FIG. 3F is a spot diagram of light beams L3 in marker 300.

As illustrated in FIGS. 2A and 3A to 3C, in marker 300' according to the comparative example, since the sectional shape of convex surface 321' in the section of marker 300' taken along the first direction (the X-direction) and along the height direction (the Z-direction) of marker 300' is an arc, those of light beams L1 which are incident on convex surface 321' at positions distant from central axis CA' cross central axis CA' at a point offset from focal point F' of convex surface 321' on the side of convex surface 321' (spherical aberration). It is understood that the outline of the spot at the detection object part is larger accordingly. It is also understood that light beams L2 and L3 whose inclination angles to central axis CA' of convex surface 321' are greater cross central axis CA' at a point offset from focal point F' of convex surface 321' further on the side of convex surface 321' and, therefore, the outlines of their spots at the detection object part are still larger. In the case where light beams are not focused in the vicinity of focal point F' of convex surface 321' as described above, the detection object part is observed unclearly.

In contrast, as illustrated in FIGS. 2B and 3D to 3F, in marker 300 according to Embodiment 3, since the sectional shape of convex surface 321 in the section of marker 300 taken along the first direction (the X-direction) and along the height direction (the Z-direction) of marker 300 has a radius of curvature increasing with increasing distance from vertex 323, even those of light beams L1 which are incident on convex surface 321 at positions distant from central axis CA cross central axis CA at a point in the vicinity of focal point F of convex surface 321. It is understood that the outline of the spot at detection object part 141 is smaller accordingly. That is, spherical aberration is reduced in marker 300 according to Embodiment 3. It is also understood that light beams L2 and L3 whose inclination angles to central axis CA of convex surface 321 are greater make slightly larger the outlines of their spots at detection object parts 141. Moreover, comparison between FIGS. 3A to 3C and FIGS. 3D to 3F showed that marker 300 according to Embodiment 3 can make smaller the outlines of the spots at detection object part 341 than the outlines of the spots formed with marker 300' according to the comparative example. That is, marker 300 according to Embodiment 3 makes it possible to observe detection object parts 141 clearly without blurring irrespective of the viewpoint (e.g., angle).

Note that, this simulation as conducted with cylindrical convex surface 121 of marker 100 according to the embodiment of the present invention shows that the shapes of spot diagrams corresponding to the spot diagrams of FIGS. 3D to 3F are each elongated in the upper-lower direction in FIGS. 3D to 3F (the widths of the shapes in the left-right direction in the figures do not change). This is because convex surface 121 of marker 100 according to Embodiment 1 has curvature only in the first direction. As with aforementioned convex surface 321' of marker 300' according to the comparative example, in the case where the sectional shape of the convex surface in the section of the marker taken along the first direction (the X-direction) and along the height direction (the Z-direction) of the marker is an arc, those of light beams L1 which are incident on the convex surface at positions distant from central axis CA' cross central axis CA' at a point offset from the focal point of the convex surface on the convex-surface side (spherical aberration). It is understood that the outline of the spot at detection object part is greater accordingly. It is also understood that light beams L2 and L3 whose inclination angles to central axis CA' of the convex surface are greater cross central axis CA' at a point offset from the focal point of the convex surface further on the convex surface side and, therefore, the distances of dispersion of the spots at the detection object part are greater. In the case where the convex surface is a spherical surface and light beams are not focused in the vicinity of the focal point as described above, the detection object part is observed unclearly. In contrast, it is understood that, in the case where the sectional shape of convex surface 121 in the section of marker 100 taken along the first direction (the X-direction) and along the height direction (the Z-direction) of marker 100 is a curve whose radius of curvature increases with increasing distance from vertex 123 of the curve and detection object part 141 is situated on the focal point of convex surface 121, the spots formed by light beams L1, light beams L2, or light beams L3 can be made smaller irrespective of the angle to optical axis OA than in the case of the marker according to the comparative example.

### (Effect)

As described above, in marker 100 according to the embodiment of the present invention, the sectional shape of convex surface 121 is a curve whose radius of curvature increases with increasing distance from the vertex of the curve. Therefore, detection object parts 141 can be clearly observed in marker 100 according to the embodiment of the present invention.

### [Embodiment 2]

Marker 200 according to Embodiment 2 is identical to marker 100 according to Embodiment 1 except the relationship between the center-to-center distance of detection object parts 241 and the distance between vertices 123 of convex surfaces 121. Accordingly, the same components between marker 200 according to Embodiment 2 and marker 100 according to Embodiment 1 are provided with the same reference signs and the descriptions of such components are omitted.

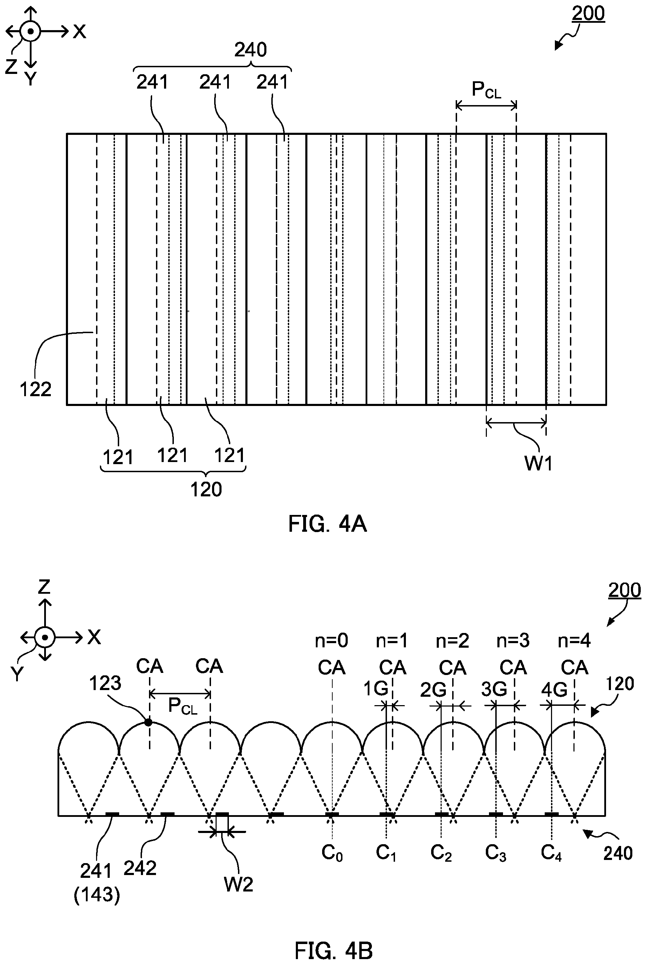

FIGS. 4A and 4B illustrate the configuration of marker 200 according to Embodiment 2 of the present invention. FIG. 4A is a plan view of marker 200 according to Embodiment 2 of the present invention, and FIG. 4B is a front view of marker 200. As illustrated in FIGS. 4A and 4B, marker 200 according to Embodiment 2 includes first surface 120 and second surface 240. First surface 120 includes a plurality of convex surfaces 121. In addition, second surface 240 includes a plurality of detection object parts 241 and a plurality of reflecting parts 242. Further, the distance between vertices 123 is greater than the center-to-center distance of detection object parts 241.

### (Effect)

As described above, marker 200 according to the present embodiment has the same effect as marker 100 of Embodiment 1.

### [Embodiment 3]

Marker 300 according to Embodiment 3 differs from marker 100 according to Embodiment 1 in the shape of convex surfaces 321, the shape of detection object parts 341, and the shape of reflection parts 342. Accordingly, the same components between marker 300 according to Embodiment 3 and marker 100 according to Embodiment 1 are provided with the same reference signs and the descriptions of such components are omitted.

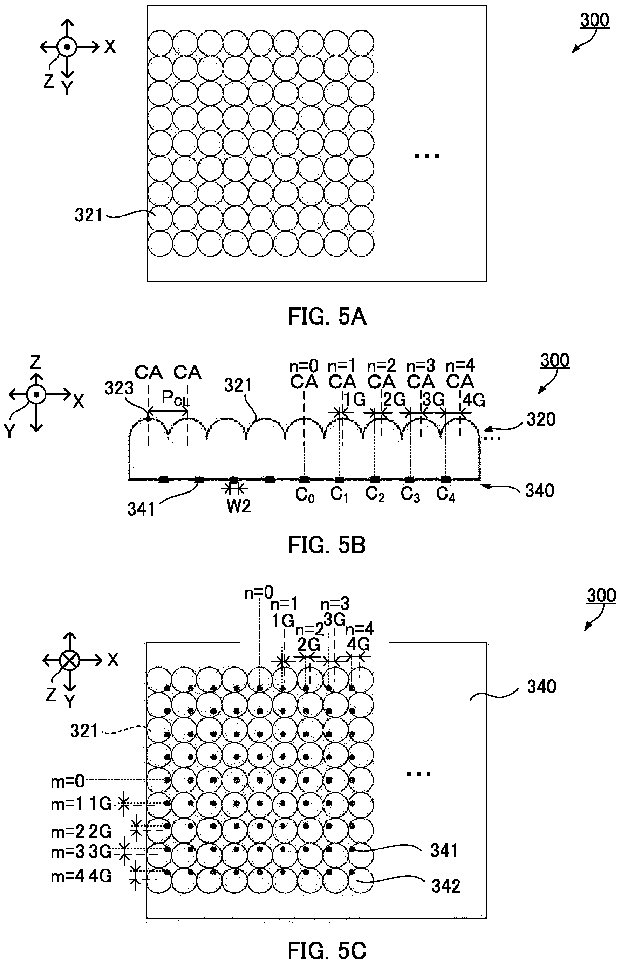

FIGS. 5A to 5C illustrate the configuration of marker 300 according to Embodiment 3 of the present invention. FIG. 5A is a plan view of marker 300 according to Embodiment 3 of the present invention, FIG. 5B is a partly-enlarged sectional view of marker 300, in which hatching is omitted, and FIG. 5C is a bottom view of marker 300.

As illustrated in FIGS. 5A to 5C, marker 300 according to Embodiment 3 includes first surface 320 and second surface 340. First surface 320 includes a plurality of convex surfaces 321. In addition, second surface 340 includes a plurality of detection object parts 341 and reflecting parts 342.

Convex surfaces 321 are each circular in plan view, and each have the same size. For example, the diameter of convex surface 321 in plan view is 350 µm, and pitch P_{CL} of convex surfaces 321 is 350 µm in both of the first and the third directions. The "pitch" as used in this context means the distance between the centers (vertices 323 or central axes CA) of adjacent convex surfaces 321. Additionally, the term "central axis CA of convex surface 321" means a straight line passing through the center of convex surface 321 in plan view of convex surface 321 and extending along the second direction. Moreover, the term "vertex 323 of convex surface 321" means an intersection of convex surface 321 and central axis CA.

In the section of marker 300 taken along the height direction (the Z-direction) of marker 300, convex surfaces 321 are each a curve whose radius of curvature increases with increasing distance from vertex 323 of the curve. That is, since central axis CA of convex surface 321 is the straight line parallel to the second direction (the Z-direction), convex surface 321 is a curved surface whose radius of curvature increases with increasing distance from central axis CA. That is, convex surface 321 is rotationally symmetrical about a rotational axis, which is central axis CA. Such a radius of curvature may increase with increasing distance from vertex 323 of the curve, continuously or intermittently. Focal point F of convex surface 321 is situated on detection object part 341.

Additionally, convex surfaces 321 include, on the rear surface side, detection object parts 341 disposed at positions respectively corresponding to convex surfaces 321. For example, detection object parts 341 are each circular in plan view, and each have a diameter of 45 µm and a depth of 10 µm.

The center-to-center distance (|Cₙ-Cₙ₋₁|) of detection object parts 341 adjacent to each other in the first direction (the X-direction) is P_{CL} + nG (µm), and the center-to-center distance (|Cₘ-Cₘ₋₁|) of detection object parts 341 adjacent to each other in the third direction (the Y-direction) is P_{CL} + mG (µm). The "n" represents an order of a certain convex surface 321 with respect to 0th convex surface 321 in the first direction (the X-direction). The "m" represents an order of a certain convex surface 321 with respect to 0th convex surface 321 in the third direction (the Y-direction).

As understood from the above descriptions, detection object parts 341 corresponding to convex surfaces 321 located at respective distances from central convex surface 321 (n=0) in the first direction (the X-direction) are disposed to be offset outward in the first direction (the X-direction) from central axes CA of corresponding convex surfaces 321, respectively. In addition, detection object parts 341 corresponding to convex surfaces 321 located at respective distances from central convex surface 321 (m=0) in third direction (the Y-direction) are disposed to be offset outward in the third direction (the Y-direction) from central axes CA of corresponding convex surfaces 321, respectively. That is, the distance between vertices 323 of convex surfaces 321 adjacent to each other is smaller in the first direction (the X-direction) and the third direction (the Y-direction) than the center-to-center distance of detection object parts 341 adjacent to each other in the present embodiment.

As described above, marker 300 according to the present embodiment has the same effect as marker 100 of Embodiment 1.

### [Embodiment 4]

Marker 400 according to Embodiment 4 is identical to marker 300 according to Embodiment 3 except the shape of convex surfaces 421. Accordingly, the same components between marker 400 according to Embodiment 4 and marker 300 according to Embodiment 3 are provided with the same reference signs and the descriptions of such components are omitted.

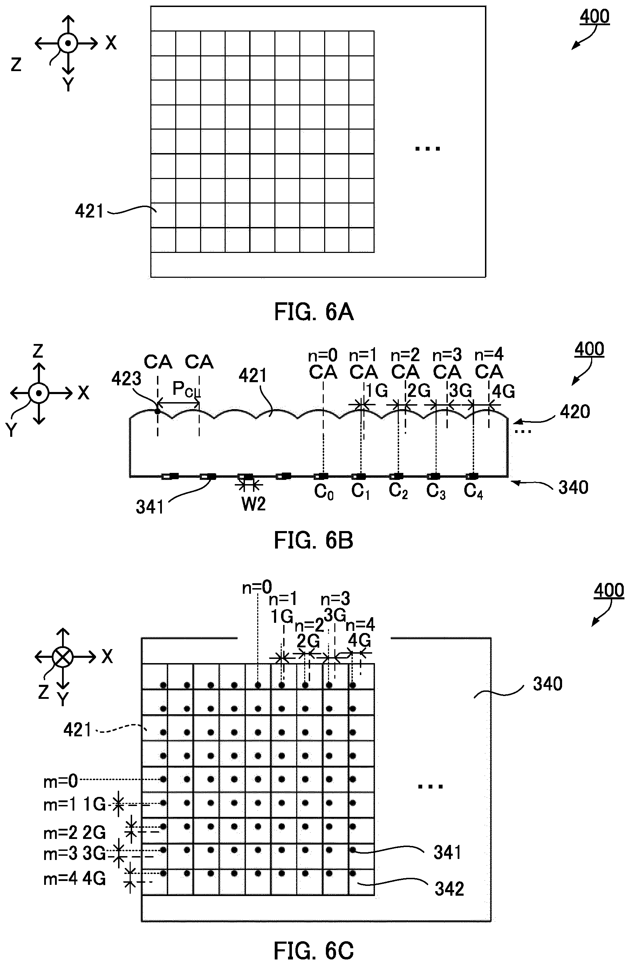

FIGS. 6A to 6C illustrate the configuration of marker 400 according to Embodiment 4 of the present invention. FIG. 6A is a plan view of marker 400 according to Embodiment 4 of the present invention, FIG. 6B is a partly-enlarged sectional view of marker 400, in which hatching is omitted, and FIG. 6C is a bottom view of marker 400.

As illustrated in FIGS. 6A to 6C, marker 400 according to Embodiment 4 includes first surface 420 and second surface 340. First surface 420 includes a plurality of convex surfaces 421. In addition, second surface 340 includes a plurality of detection object parts 341 and reflecting parts 342.

Convex surfaces 421 are each square in plan view, and each have the same size. For example, the length of each side of convex surface 421 in plan view is 350 µm, and pitch P_{CL} of convex surfaces 421 is 350 µm in both of the first and the third directions. The "pitch" as used in this context means the distance between the centers (vertices 423 or central axes CA) of adjacent convex surfaces 421. Additionally, the term "central axis CA of convex surface 421" means a straight line passing through the center of convex surface 421 in plan view of convex surface 421 and extending along the second direction. Moreover, the term "vertex 423 of convex surface 421" means an intersection of convex surface 421 and central axis CA.

In the section of marker 400 taken along the height direction (the Z-direction) of marker 400, convex surfaces 421 are each a curve whose radius of curvature increases with increasing distance from vertex 423 of the curve. That is, since central axis CA of convex surface 421 is the straight line parallel to the second direction (the Z-direction), convex surface 421 is a curved surface whose radius of curvature increases with increasing distance from central axis CA. Such a radius of curvature may increase with increasing distance from vertex 423 of the curve, continuously or intermittently. Focal point F of convex surface 421 is situated on detection object part 341.

The center-to-center distance (|Cₙ-Cₙ₋₁|) of detection object parts 341 adjacent to each other in the first direction (the X-direction) is P_{CL} - nG µm, and the center-to-center distance (|Cₘ-Cₘ₋₁|) of detection object parts 341 adjacent to each other in the third direction is P_{CL} - mG µm. As described above, the "n" represents an order of a certain convex surface 421 with respect to 0th convex surface 421 in the first direction. The "m" represents an order of a certain convex surface 421 with respect to 0th convex surface 421 in the third direction.

As understood from the above descriptions, detection object parts 341 corresponding to convex surfaces 421 located at respective distances from central convex surface 421 (n=0) in the first direction (the X-direction) are disposed to be offset inward in the first direction (the X-direction) from central axes CA of corresponding convex surfaces 421, respectively. In addition, detection object parts 341 corresponding to convex surfaces 421 located at respective distances from central convex surface 421 (m=0) in third direction (the Y-direction) are disposed to be offset inward in the third direction (the Y-direction) from central axes CA of corresponding convex surfaces 421, respectively. That is, the distance between vertices 423 of convex surfaces 421 adjacent to each other is greater in the first direction (the X-direction) and the third direction (the Y-direction) than the center-to-center distance of detection object parts 341 adjacent to each other in the present embodiment.

### (Effect)

As described above, marker 400 according to the present embodiment has the same effect as marker 300 of Embodiment 3.

Note that, although the distances between vertices 323 and 423 of convex surfaces 321 and 421 adjacent to each other are greater than the center-to-center distances of detection object parts 341 adjacent to each other in Embodiments 3 and 4, the distances between vertices 323 and 423 of convex surfaces 321 and 421 adjacent to each other may also be smaller than the center-to-center distances of detection object parts 341 adjacent to each other.

### [Embodiment 5]

Marker 700 according to Embodiment 5 is identical to marker 300 according to Embodiment 3 except second surfaces 124. Accordingly, the same components between marker 700 according to Embodiment 5 and marker 300 according to Embodiment 3 are provided with the same reference signs and the descriptions of such components are omitted.

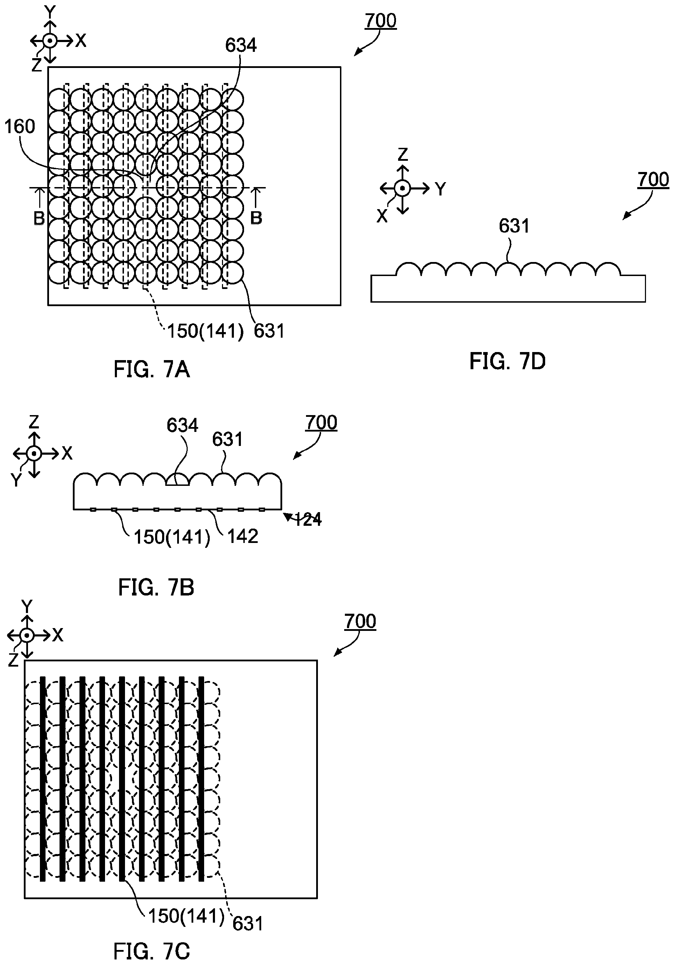

FIG. 7A is a plan view of marker 700, FIG. 7B is a partial sectional view, in which hatching is omitted, of a part of marker 700 sectioned along line B-B in FIG. 7A, FIG. 7C is a bottom view of marker 700, and FIG. 7D is a side view of marker 700.

Second surface 124 is the same as that of Embodiment 1. That is, second surface 124 includes first regions 141 and second regions 142. First regions 141 are each a rectangular recess elongated along the Y-direction in the XY plane, and are each disposed such that first region 141 extends across convex surface portions 631 lined along the Y-direction. In addition, second regions 142 are arranged alongside one another in the X-direction to correspond to the lines of convex surface portions 631.

Moreover, as for detection object parts 150 in relation to convex surface portions 631, the pitches between convex surface portions 631 adjacent to one another (between convex surface portions 631 in each adjacent line) are greater in the X-direction than the center-to-center distance of detection object parts 150 which are similarly adjacent to each other. Additionally, positioning portion 160 is disposed at a position corresponding to plane surface portion 643.

Observed in marker 700 are linear images along the Y-direction as groups of individual images respectively projected on convex surface portions 321. These linear images are observed as if the linear images move in a direction toward the viewer as marker 700 is tilted to the viewer side with respect to the X-direction.

### (Effect)

Marker 700 according to the present embodiment has the advantage that the contrast of the image in the Y-direction in marker 700 is higher since convex surface portions 631 are curved not only in the X-direction, but also in the Y-direction.

### [Embodiment 6]

Marker 800 according to Embodiment 6 is identical to marker 700 according to Embodiment 5 except the configuration of convex surface portions 831. Accordingly, the same components between marker 800 according to Embodiment 6 and marker 700 according to Embodiment 5 are provided with the same reference signs and the descriptions of such components are omitted.

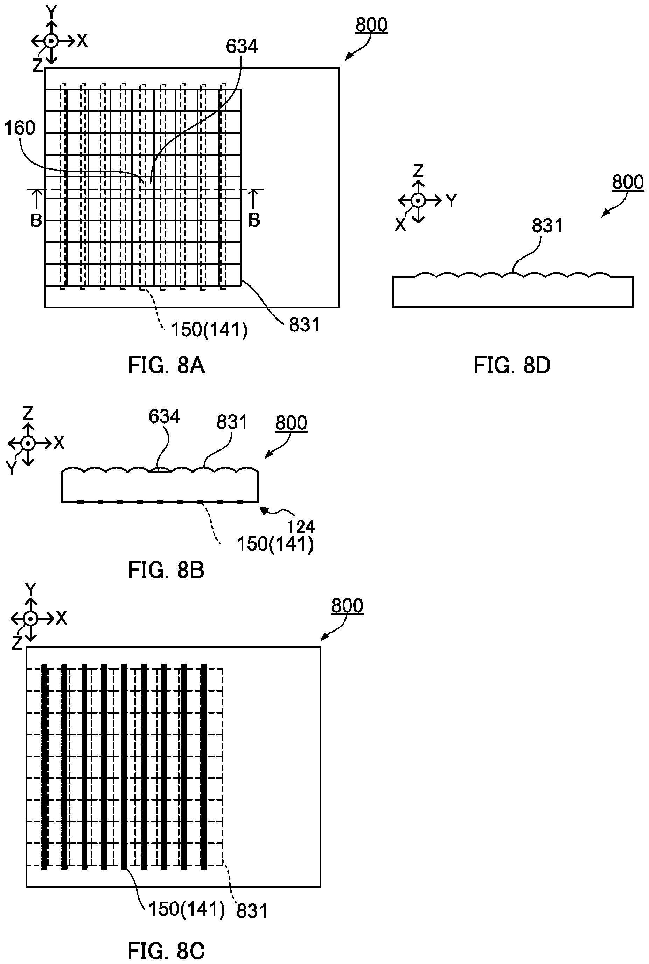

FIG. 8A is a plan view of marker 800, FIG. 8B is a partial sectional view, in which hatching is omitted, of a part of marker 800 sectioned along line B-B in FIG. 8A, FIG. 8C is a bottom view of marker 800, and FIG. 8D is a side view of marker 800.

Convex surface portions 831 in Embodiment 6 are each square in plan view. In addition, the shape of convex surface portion 831 in the section along the optical axis of convex surface portion 831 is, for example, a curve whose radius of curvature increases with increasing distance from the vertex of convex surface portion 831.

### (Effect)

In marker 800 according to the present embodiment, the advantage the same as marker 700 according to Embodiment 5 is provided and, in addition, images can be clearly detected irrespective of the intensity of light incident on the first surface of the lenticular lens portion. One possible reason for this may be that the first surface of marker 800 is composed substantially only of convex surface portions 631 (curved surfaces) and includes substantially no plane surface, and thus reflected light on the first surface is less likely to be generated or is weak in comparison with marker 700, while, in the case where the intensity of the incident light is high, the intensity of the reflected light in marker 800 such as the light reflected on the first surface is also high and the visibility of the images might be reduced accordingly.

### [Embodiment 7]

Marker 900 according to Embodiment 7 is identical to marker 700 according to Embodiment 6 except the configuration of convex surface portions 931. Accordingly, the same components between marker 900 according to Embodiment 7 and marker 700 according to Embodiment 6 are provided with the same reference signs and the descriptions of such components are omitted.

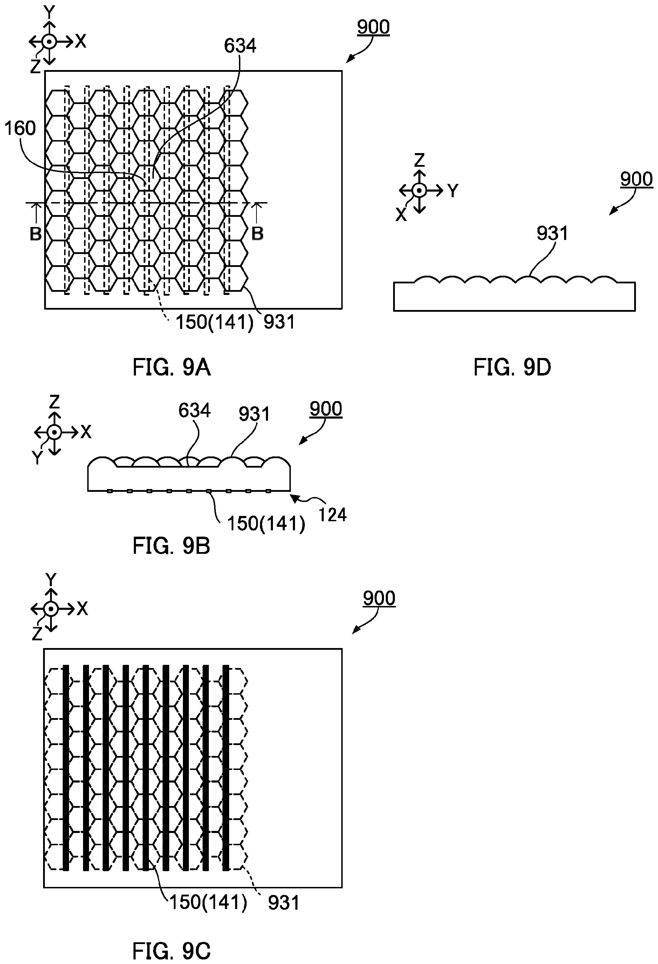

FIG. 9A is a plan view of marker 900, FIG. 9B is a partial sectional view, in which hatching is omitted, of a part of marker 900 sectioned along line B-B in FIG. 9A, FIG. 9C is a bottom view of marker 900, and FIG. 9D is a side view of marker 900.

Convex surface portions 931 in Embodiment 7 each have a regular hexagonal shape in plan view. In addition, the shape of convex surface portion 931 in the section along the optical axis of convex surface portion 931 is represented by a curve whose radius of curvature increases with increasing distance from the vertex of convex surface portion 931. Regarding the line of convex surface portions 931 in the Y-direction, convex surface portions 931 are arranged to be in contact with one another along the Y-direction at their sides facing one another. In addition, the lines of convex surface portions 931 are arranged in the X-direction such that connected portions of convex surface portions 931 in one line are in contact with one corners of hexagonal convex surface portions 931 in another line. In this manner, in marker 900, convex surface portions 931 are fully closely arranged in a collective manner over the entire first surface of the lenticular lens portion, substantially.

### (Effect)

Marker 900 according to the present embodiment has the same effect as marker 800 of Embodiment 6.

The present patent application claims the benefit of priority based on Japanese Patent Application No. 2016-058546 filed on March 23, 2016. The disclosures of the specifications, drawings and abstracts of those Japanese Patent Applications are incorporated in the specification of the present application by reference in its entirety.

### Industrial Applicability

The marker according to the present invention is useful for a position detecting marker (or, an angle detecting marker) for recognizing the position, attitude, and/or the like of an object. Accordingly, the present invention is expected to contribute to further development of the technical field of the above-mentioned marker.

### Reference Signs List

100, 200, 300, 300', 400 Marker
120, 320, 420 First surface
121, 321, 321', 421 Convex surface
122 Ridgeline
123, 323, 323', 423 Vertex
140, 340 Second surface
141, 241, 341 Detection object part
142, 242, 342 Reflecting part
143 Coating Film
F, F' Focal point
CA, CA' Central axis

## Claims

1. A marker formed of an optically transparent material, the marker comprising:
a plurality of convex surfaces disposed at least along a first direction; and
a plurality of detection object parts respectively disposed opposite to the plurality of convex surfaces, and configured to be respectively projected onto the plurality of convex surfaces in a form of optically detectable images, wherein
a sectional shape of each of the plurality of convex surfaces in a section of the marker taken along the first direction and along a height direction of the marker is a curve whose radius of curvature increases with increasing distance from a vertex of the curve.

2. The marker according to claim 1, wherein
the each of the plurality of convex surfaces includes a linear ridgeline extending in a direction perpendicular to the first direction and to the height direction of the marker.

3. The marker according to claim 1, wherein
the each of the plurality of convex surfaces is rotationally symmetrical about a rotational axis, wherein an axis along the height direction of the marker serves as the rotational axis.
